# EUROPÄISCHE PATENTANMELDUNG

(11) **EP 2 262 085 A1**
(43) Veröffentlichungstag der Anmeldung: **15.12.2010**
(21) Anmeldenummer: 09007762.9
(22) Anmeldetag: 12.06.2009
(51) Int. Cl.: H02K 33/18, A61C 17/34, B26B 19/28

(54) **Elektrisches Kleingerät und elektromotorische Antriebseinheit für ein elektrisches Kleingerät**

(71) Anmelder: Braun GmbH, 61476 Kronberg/Taunus (DE)
(72) Erfinder: Doll, Alexander, 61476 Kronberg/Taunus (DE); Schober, Uwe, 61479 Glashütten (DE); Kreßmann, Frank, 65760 Eschborn (DE); Ziegler, Frank, 60489 Frankfurt/Main (DE)

(57) **Zusammenfassung**

Die Erfindung betrifft ein elektrisches Kleingerät mit einem Kopfelement, das eine rotatorische Bewegung (R) und eine translatorische Schwingungsbewegung (L) ausführt, einem Gehäuse (4), einer elektromotorischen Antriebseinheit (10) in dem Gehäuse (4) mit einem ersten Abtrieb zur Erzeugung einer rotatorischen Bewegung (R) bezüglich des Gehäuses (4), der wenigstens eine erste Komponente (12) der elektromotorischen Einheit (10) umfasst, und einem zweiten Abtrieb zur Erzeugung einer translatorischen Schwingungsbewegung (L) bezüglich des Gehäuses (4), der wenigstens eine zweite Komponente (28) der elektromotorischen Antriebseinheit (10) umfasst. Weiterhin ist eine Welle (62) vorgesehen, mit der die erste Komponente (12) zur Übermittlung der rotatorischen Bewegung (R) an das Kopfelement verbunden ist. Außerdem ist eine Schwinge (46) vorgesehen, die mit der zweiten Komponente (28) zur Übermittlung der translatorischen Schwingungsbewegung (L) an das Kopfelement verbunden ist.
Erfindungsgemäß sind die erste Komponente (12) und die zweite Komponente (28) derart voneinander entkoppelt, dass die erste Komponente (12) der Schwingungsbewegung (L) der zweiten Komponente (28) nicht folgt.
Die Erfindung betrifft weiterhin eine elektromotorische Antriebseinheit (10), die mit einem erfindungsgemäßen elektrischen Kleingerät eingesetzt werden kann und ein Verfahren zum Betreiben einer solchen elektromotorischen Antriebseinheit.

## Beschreibung

Die Erfindung betrifft ein elektrisches Kleingerät, eine darin einsetzbare elektromotorische Antriebseinheit und ein Verfahren zum Betreiben einer solchen elektromotorischen Antriebseinheit.

Es sind elektrische Kleingeräte bekannt, bei denen ein Kopfelement eine rotatorische Bewegung und eine translatorische Schwingungsbewegung gleichzeitig ausführt. Beispiele sind entsprechend ausgestaltete elektrische Rasierapparate und insbesondere elektrische Zahnbürsten.

Eine solche elektrische Zahnbürste ist z.B. in EP 0 850 027 B1 beschrieben. In einem Griffgehäuse ist bei der bekannten elektrischen Zahnbürste eine elektromotorische Antriebseinheit in einem Gehäuse vorgesehen, die zum einen eine Rotationsbewegung auf eine Welle überträgt, die z.B. in eine drehende Bewegung eines Borstenkopfes der Zahnbürste umgesetzt werden kann. Dazu wird die Drehbewegung eines Elektromotors mit Hilfe eines Getriebes übertragen. Eine zweite Komponente der elektromotorischen Antriebseinheit ist exzentrisch mit dem Abtrieb des Elektromotors verbunden und bewirkt so eine translatorische Schwingungsbewegung einer Schwinge um eine quer zur Motorachse liegende Achse. Diese Schwenkbewegung wird von der Schwinge und der darin geführten Welle, die zur Übertragung der rotatorischen Schwingungsbewegung dient, mitgemacht.

Es sind Elektromotoren bekannt, die eine rotatorische und eine lineare Schwingungsbewegung erzeugen können und zum Beispiel für elektrische Zahnbürsten eingesetzt werden. So weist zum Beispiel ein in WO 2005/062445 beschriebener Elektromotor zwei schwingungsfähige Motorkomponenten und eine Magnetanordnung mit mehreren Permanentmagneten auf. Eine Spule ist zur Erzeugung eines Magnetfeldes vorgesehen. In Wechselwirkung mit der Magnetanordnung wirkt dieses Magnetfeld zur Erzeugung einer Kraft zur Anregung einer linearen Schwingungsbewegung einer der schwingungsfähigen Komponenten. Die Wechselwirkung des mit der Spule erzeugten Magnetfeldes und der Magnetanordnung erzeugt zusätzlich ein Drehmoment zur Anregung einer rotatorischen Schwingungsbewegung einer zweiten schwingungsfähigen Motorkomponente. Mit einer solchen Anordnung kann sowohl eine lineare als auch eine rotatorische Schwingungsbewegung erzeugt werden, ohne dass ein Getriebe erforderlich ist.

Es ist die Aufgabe der vorliegenden Erfindung, ein verbessertes elektrisches Kleingerät mit einem einfachen und kompakten Aufbau anzugeben. Außerdem sollen eine vorteilhafte elektromotorische Antriebseinheit und ein Verfahren zu deren Betrieb bereitgestellt werden, die für den Einsatz in einem solchen elektrischen Kleingerät geeignet sind.

Die Aufgabe wird mit einem elektrischen Kleingerät mit den Merkmalen des Anspruches 1, einer elektromotorischen Antriebseinheit mit den Merkmalen des Anspruches 7 bzw. einem Verfahren mit den Merkmalen des Anspruches 14 gelöst. Unteransprüche sind jeweils auf bevorzugte Ausgestaltungen gerichtet.

Ein erfindungsgemäßes elektrisches Kleingerät weist ein Kopfelement auf, das eine rotatorische Bewegung und eine translatorische Schwingungsbewegung ausführt. Es kann sich dabei z.B. um den Bürstenkopf einer elektrischen Zahnbürste handeln. Das erfindungsgemäße elektrische Kleingerät weist ein Gehäuse mit einer elektromotorischen Antriebseinheit auf. Diese hat einen ersten Abtrieb zur Erzeugung einer rotatorischen Bewegung bezüglich des Gehäuses, wobei der Abtrieb wenigstens eine erste Komponente der elektromotorischen Antriebseinheit umfasst. Ein zweiter Abtrieb der elektromotorischen Antriebseinheit dient der Erzeugung einer translatorischen Schwingungsbewegung bezüglich des Gehäuses und weist wenigstens eine zweite Komponente der elektromotorischen Antriebseinheit auf. Ein Welle ist mit der ersten Komponente der elektromotorischen Antriebseinheit zur Übermittlung der rotatorischen Bewegung an das Kopfelement und eine Schwinge ist mit der zweiten Komponente der elektromotorischen Antriebseinheit zur Übermittlung der translatorischen Schwingungsbewegung an das Kopfelement verbunden.

Das erfindungsgemäße elektrische Kleingerät zeichnet sich insbesondere dadurch aus, dass die erste Komponente und die zweite Komponente derart voneinander entkoppelt sind, dass die erste Komponente der Schwingungsbewegung der zweiten Komponente nicht folgt. Das heißt insbesondere, dass die erste Komponente der elektromotorischen Einheit, die die Welle zur Übermittlung der rotatorischen Bewegung antreibt, die translatorische Schwingungsbewegung der Schwinge nicht mitmacht. Zumindest in dem Bereich, in dem die Welle mit der ersten Komponente der elektromotorischen Antriebseinheit verbunden ist, führt die Welle also keine Schwingungsbewegung in translatorischer Richtung aus. Es ist also nicht notwendig, wie z.B. beim oben geschilderten Stand der Technik, eine Getriebeübersetzung derart zu gestalten, dass die rotatorische Bewegung auf die Welle übertragen werden kann, obwohl auch der Einkopplungspunkt der rotatorischen Bewegung vom Abtrieb der elektromotorischen Antriebseinheit in die Welle die translatorische Bewegung mitmacht.

Das erfindungsgemäße elektrische Kleingerät ermöglicht daher einen einfachen Aufbau und insbesondere auch eine kleine Bauform.

Die Entkopplung der ersten und der zweiten Komponente lässt sich z.B. in einer elektromotorischen Antriebseinheit realisieren, bei der die erste Komponente und die zweite Komponente Permanentmagneten umfassen, die sich im Feld einer entsprechend angeregten Spule unabhängig voneinander bewegen, also insbesondere keine starre mechanische Verbindung umfassen.

Bei dem erfindungsgemäßen Kleingerät bewegt sich die Schwinge in translatorischer Richtung relativ sowohl zum Gehäuse als auch zumindest zum Einkopplungspunkt der rotatorischen Bewegung in die Welle. Besonders vorteilhaft ist es, wenn zwischen der Schwinge und dem Gehäuse eine Dichtung vorgesehen ist, die derart als Puffer ausgestaltet ist, dass bei dieser translatorischen Relativbewegung zwischen Schwinge und Gehäuse eine dichte Verbindung zwischen Schwinge und Gehäuse sichergestellt ist, um z.B. Feuchtigkeit vom Inneren des Gehäuses abzuhalten.

Die Rotationsbewegung, die das Kopfelement des elektrischen Kleingerätes durchführt, kann eine kontinuierliche Rotationsbewegung sein. Insbesondere bei der Anwendung für eine elektrische Zahnbürste ist eine rotatorische Schwingungsbewegung jedoch vorteilhaft.

Eine erfindungsgemäße elektromotorische Antriebseinheit lässt sich vorteilhaft in einem erfindungsgemäßen elektrischen Kleingerät einsetzen, insbesondere in einem elektrischen Kleingerät, bei dem eine translatorische Schwingungsbewegung und eine rotatorische Schwingungsbewegung auf das Kopfelement übertragen werden. Insofern ist sowohl die erste als auch die zweite Komponente der erfindungsgemäßen elektromotorischen Antriebseinheit schwingungsfähig ausgestaltet. Wie weiter unten erläutert wird, ermöglicht es die erfindungsgemäße elektromotorische Antriebseinheit, dass sowohl Linearbewegungen als auch Rotationsbewegungen unabhängig voneinander und ohne ein aufwändiges zusätzliches Getriebe erzeugt werden können. Insofern stellen die erste und die zweite schwingungsfähige Komponente Teile eines Elektromotors dar, der für die Erzeugung dieser Linearbewegungen und Rotationsbewegungen verantwortlich ist. Die erste und die zweite Komponente werden bei der Schilderung der erfindungsgemäßen elektromotorischen Antriebseinheit daher auch als erste und zweite Motorkomponente bezeichnet.

Eine erfindungsgemäße elektromotorische Antriebseinheit weist wenigstens eine erste und wenigstens eine zweite schwingungsfähige zumindest teilweise metallische Motorkomponente und eine Spule zur Erzeugung eines Magnetfeldes auf. Eine erste Magnetanordnung weist wenigstens einen ersten Permanentmagneten auf, der in Wechselwirkung mit einem mit der Spule erzeugten Magnetfeld eine Kraft zur Anregung einer rotatorischen Schwingung der wenigstens einen ersten schwingungsfähigen Motorkomponente erzeugt. Eine zweite Magnetanordnung ist vorgesehen, die wenigstens einen zweiten Permanentmagneten aufweist, der in Wechselwirkung mit einem mit der Spule erzeugten Magnetfeld eine Kraft zur Anregung einer linearen Schwingungsbewegung der wenigstens einen zweiten Motorkomponente erzeugt. Die erfindungsgemäße elektromotorische Antriebseinheit zeichnet sich insbesondere dadurch aus, dass wenigstens ein Flussleitelement vorgesehen ist, das mit der Spule erzeugten magnetischen Fluss zur Wechselwirkung mit dem wenigstens einen zweiten Permanentmagneten leitet. Das Flussleitelement umfasst dabei zum Beispiel einen entsprechend geformten metallischen Körper.

Die erfindungsgemäße elektromotorische Antriebseinheit kann sowohl Linearbewegungen als auch Rotationsbewegungen unabhängig voneinander und ohne ein aufwendiges zusätzliches Getriebe erzeugen. Das erfindungsgemäße Flussleitelement ermöglicht dabei auf einfache Weise die Ausnutzung des von der Spule erzeugten Magnetfeldes nicht nur für die Anregung der rotatorischen Schwingungsbewegung, sondern auch für die Anregung der linearen Schwingungsbewegung, indem es den magnetischen Fluss aus der Spule heraus leitet. Mit dem erfindungsgemäßen Flussleitelement ist es möglich, dass die Rotationsbewegung und die Linearbewegung voneinander unabhängig sind.

Eine einfache Ausgestaltung sieht vor, dass das Flussleitelement ein die Spulenwindungen der Magnetfeld erzeugenden Spule durchgreifendes metallisches Joch umfasst. Dabei ist vorteilhafterweise vorgesehen, dass das Flussleitelement U-förmig ist, wobei die Basis der U-Form durch die Spulenwindungen hindurch tritt, während sich die Schenkel der U-Form symmetrisch von der Basis weg erstrecken, um magnetischen Fluss außerhalb der Spulenwindungen zur Verfügung zu stellen.

Es kann zum Beispiel vorgesehen sein, dass das Flussleitelement sich relativ zu der ersten Magnetanordnung nicht bewegt. Ein besonders kompakter Aufbau ist zu realisieren, wenn zwar die erste Motorkomponente der Bewegung der zweiten Motorkomponente nicht folgt, aber das Flussleitelement dennoch die Rotationsbewegung der ersten schwingungsfähigen Komponente mitmacht.

Bei der erfindungsgemäßen elektromotorischen Antriebseinheit wird eine Spule zur Anregung unterschiedlicher Schwingungen eingesetzt. Haben die schwingungsfähige Komponente, die die rotatorische Schwingungsbewegung ausführt, und die schwingungsfähige Komponente, die die lineare Schwingungsbewegung ausführt, unterschiedliche Resonanzfrequenzen, können die beiden Schwingungen unabhängig voneinander angeregt werden. Je nach eingespeister Frequenz kann also auch eine isolierte Linearschwingungsbewegung oder eine isolierte Rotationsschwingungsbewegung erzeugt werden.

Eine besonders kostengünstige und konstruktiv einfache Ausgestaltung sieht vor, dass die wenigstens eine erste schwingungsfähige Motorkomponente und die erste Magnetanordnung derart ausgestaltet sind, dass ein nach Ausschalten des Spulenstroms wirkendes Reluktanzmoment unter Winkelauslenkung als rücktreibendes Moment für die erste schwingungsfähige Motorkomponente wirkt. Bei eingeschaltetem Spulenstrom induziert die Spule einen magnetischen Fluss in der ersten schwingungsfähigen Motorkomponente, die sich zur Energieminimierung entsprechend des von der ersten Magnetanordnung erzeugten Magnetfeldes ausrichtet. Wird nach dieser Ausrichtbewegung der Strom durch die Spule abgeschaltet, können sich die Magnetfeldlinien der ersten Magnetanordnung über die erste schwingungsfähige Komponente kurzschließen. Dadurch erfährt die erste schwingungsfähige Komponente ein Rückstellmoment (Reluktanzmoment), das die erste schwingungsfähige Motorkomponente in seine Ausgangslage zurückstellt. Bei einem solchen System sind keine aufwendigen zusätzlichen Rückstellfedern notwendig.

Ebenso kann vorgesehen sein, dass das wenigstens eine Flussleitelement und die zweite Magnetanordnung derart ausgestaltet sind, dass ein nach dem Ausschalten des Spulenstroms wirkendes Reluktanzmoment unter Linearauslenkung zumindest zum Teil das rücktreibende Moment für die zweite schwingungsfähige Motorkomponente bereitstellt.

Wie oben beschrieben ist zur Auskopplung der rotatorischen Bewegung eine Welle vorgesehen, die mit der ersten Komponente der elektromotorischen Antriebseinheit verbunden ist und bei der erfindungsgemäßen Anordnung kollinear mit der Rotationsachse der ersten Komponente ist. Die lineare Schwingungsbewegung wird auf eine Schwinge übertragen, die eine Halterung umfasst, die auf die z.B. der Bürstenkopf einer elektrischen Zahnbürste aufgesteckt werden kann. Innerhalb des Bürstenkopfes verbindet sich dabei z.B. die Welle, die die rotatorische Bewegung überträgt, mit einer entsprechenden Aufnahme, die die rotatorische Bewegung auf eine Borstenhalterung überträgt, z.B. mit Hilfe entsprechend angeordneter miteinander kämmender Zahnräder. Da bei dem erfindungsgemäßen elektrischen Kleingerät - wie beschrieben - der Einkopplungspunkt der rotatorischen Bewegung in die Welle die translatorische Bewegung nicht mitmacht, muss dazu die Welle ausreichend flexibel ausgestaltet sein oder mit einem ausreichenden Spiel in der Aufnahme des Bürstenkopfes ausgestattet sein. Alternativ kann die Welle auch über ein Gelenk verfügen, das die Welle in zwei Abschnitte unterteilt, wobei die Rotationsbewegung auf einen ersten Abschnitt übertragen wird. Die Rotationsbewegung überträgt sich über das Gelenk auf den zweiten Abschnitt der Welle, der mit der Schwinge verbunden ist. Durch das Gelenk ist gewährleistet, dass die Welle über ausreichende Nachgiebigkeit verfügt.

Bei einer besonders einfachen Ausgestaltung des Gelenkes ist die Welle im Gelenkbereich verjüngt und somit lokal in der lateralen Richtung geschwächt.

Ein erfindungsgemäßes Verfahren dient zum Betreiben einer erfindungsgemäßen elektromotorischen Antriebseinheit und zeichnet sich insbesondere dadurch aus, dass magnetischer Fluss, der mit der Spule erzeugt wird, mit Hilfe eines Flussleitelementes zur Wechselwirkung mit dem wenigstens einen zweiten Permanentmagneten geführt wird.

Die erfindungsgemäße elektromotorische Antriebseinheit und das erfindungsgemäße Verfahren und ihre jeweiligen bevorzugten Ausgestaltungen sind besonders vorteilhaft in einem erfindungsgemäßen elektrischen Kleingerät bzw. in einem Verfahren zu dessen Betrieb einsetzbar, bei dem eine rotatorische Schwingungsbewegung und eine translatorische Schwingungsbewegung benötigt werden.

Die Erfindung wird anhand der anliegenden schematischen Figuren im Detail erläutert, die beispielhaft erfindungsgemäße Ausführungsformen am Beispiel einer elektrischen Zahnbürste darstellen. Es zeigen
- Fig. 1: in höchstschematischer Darstellung ein Teil einer erfindungsgemäß ausges- talteten elektrischen Zahnbürste in drei unterschiedlichen Betriebszuständen,
- Fig. 2: in höchstschematischer Darstellung einen Teil einer elektrischen Zahnbürste des Standes der Technik,
- Fig. 3: eine Perspektivansicht des Magnetsystems einer Ausführungsform einer er- findungsgemäßen elektromotorischen Antriebseinheit,
- Fig. 4: den Querschnitt durch die Rotationseinheit der elektromotorischen Antriebs- einheit der Fig. 3,
- Fig. 5: eine perspektivische Detailansicht der elektromotorischen Antriebseinheit der Fig. 3,
- Fig. 6: den Verlauf des Reluktanzmoments in Abhängigkeit des Auslenkungswinkels des Rotors für erfindungsgemäße Ausführungsformen der elektromotorischen Antriebseinheit mit verschiedenen Rotoröffnungswinkeln,
- Fig. 7: eine Prinzipdarstellung des Antriebs einer Ausführungsform einer elektrischen Zahnbürste mit einer erfindungsgemäßen elektromotorischen Antriebseinheit in seitlicher Schnittansicht,
- Fig. 8: eine Prinzipdarstellung des Antriebs einer anderen Ausführungsform einer elektrischen Zahnbürste mit einer erfindungsgemäßen elektromotormotori- schen Antriebseinheit in seitlicher Schnittansicht, und
- Fig. 9: eine mögliche Ausgestaltung einer Welle der in der elektrischen Zahnbürste der Fig. 8 eingesetzten erfindungsgemäßen elektromotorischen Antriebsein- heit.

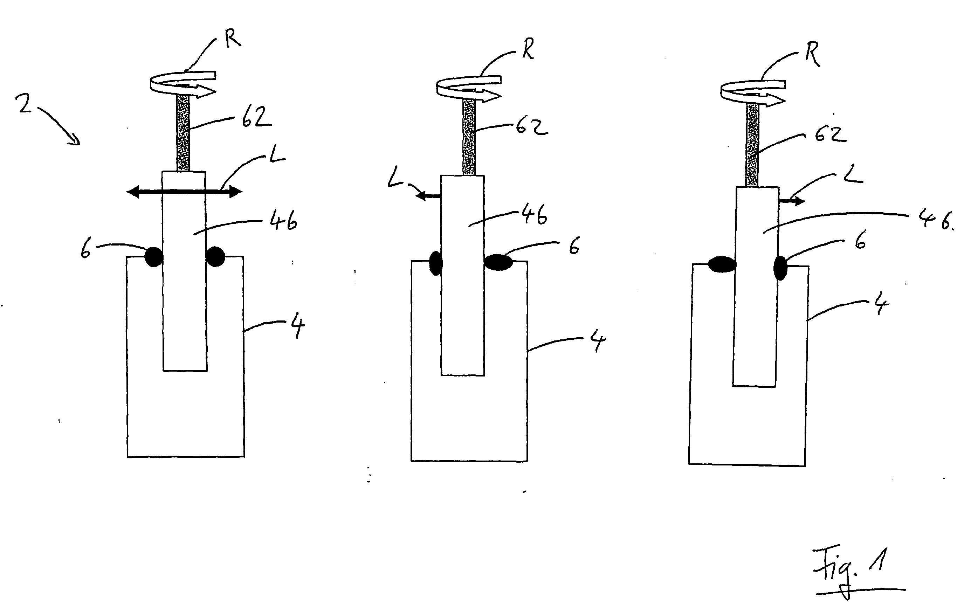

Fig. 1 zeigt den Hauptteil einer elektrischen Zahnbürste 2 in schematischer Darstellung in drei unterschiedlichen Betriebszuständen.

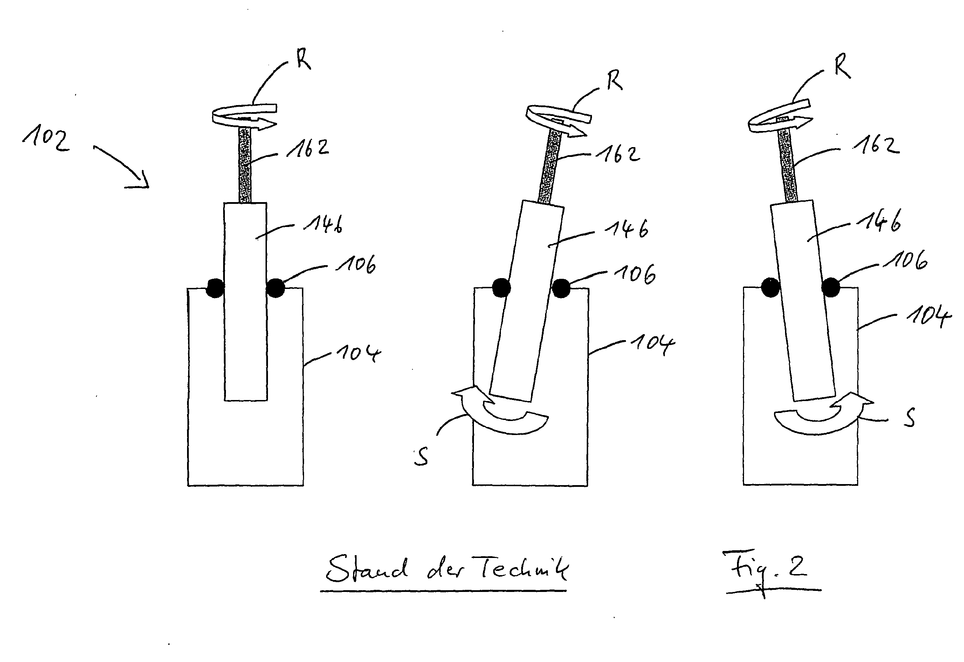

Zum besseren Verständnis wird jedoch zunächst auf Fig. 2 Bezug genommen, die ebenfalls in schematischer Darstellung vergleichbare Teile einer elektrischen Zahnbürste 102 des Standes der Technik zeigt, wie er z.B. auch in EP 0 850 027 B1 verwirklicht ist.

Ein Gehäuse 104, das auch als Griff für die elektrische Zahnbürste 102 dient, enthält einen hier nicht explizit dargestellten Elektromotor, mit dem eine Drehbewegung R, in der Regel eine rotatorische Schwingungsbewegung, auf eine Welle 162 übertragen wird. Eine Schwinge 146 ist über eine Dichtung 106 in dem Gehäuse 104 kippbar gelagert. Die Dichtung 106 dient z.B. zum Abhalten von Wasser vom Inneren des Gehäuses.

Wie es insbesondere in den beiden rechten Darstellungen der Fig. 2 erkennbar ist, führt die Schwinge 146 eine Schwenkbewegung S um eine Achse aus, die quer zu der Achse der Rotationsschwingungsbewegung R ist. Es ist offensichtlich, dass entweder die ganze elektromotorische Antriebseinheit, die für die rotatorische Schwingungsbewegung R verantwortlich ist, oder zumindest wesentliche Teile, insbesondere der Einkoppelungspunkt der rotatorischen Bewegung in die Welle 162, die Schwenkbewegung S mitmachen, damit die Rotationsschwingungsbewegung R auf die ebenfalls die Schwenkbewegung mitmachende Welle 162 übermittelt werden kann.

Auf die Schwinge 146 wird das Gehäuse eines Zahnbürstenkopfes aufgesteckt, so dass die Schwenkbewegung S direkt auf den Bürstenkopf übertragen wird und z.B. zur Bereitstellung einer Stocherbewegung zur Entfernung von Plaque verwendet werden kann. Gleichzeitig greift die Welle 162 in eine Aufnahme innerhalb des Bürstenkopfes ein, die die rotatorische Schwingungsbewegung R auf einen Bürstenkopf übertragen kann, um die Zahnreinigung zu ermöglichen.

Bei einer elektrischen Zahnbürste 2 gemäß einer Ausführungsform der Erfindung, wie sie in Fig. 1 gezeigt ist, führt die Schwinge 46 keine Schwenkbewegung, sondern eine translatorische Schwingungsbewegung L aus. Während in der linken Darstellung der Fig. 1 die mittige Stellung gezeigt ist, zeigen die beiden rechten Darstellungen der Fig. 1 die Schwinge 46 in ihren beiden Maximalauslenkungen in den unterschiedlichen lateralen Richtungen. Die Welle 62 führt eine Rotationsschwingungsbewegung R aus. Beide Schwingungsbewegungen R und L werden von einer elektromotorischen Antriebseinheit innerhalb des Gehäuses 4 erzeugt, die hier nicht dargestellt ist. Damit die Schwinge 46 die translatorische Schwingungsbewegung L ausführen kann, ist die Dichtung 6 als Puffer ausgestaltet, der eine ausreichende Flexibilität aufweist, dass auch bei der translatorischen Schwingungsbewegung L der Schwinge 46 eine Abdichtung gegenüber dem Gehäuse 4 gewährleistet ist.

Die hier nicht gezeigte elektromotorische Antriebseinheit in dem Gehäuse weist zumindest zwei Motorkomponenten auf, von denen eine für die rotatorische Schwingungsbewegung R zuständig ist und eine entsprechende Bewegung auf die Welle 62 übertragen kann, und eine andere für die translatorische Schwingungsbewegung L zuständig ist. Wie es in Fig. 1 dargestellt ist, macht die Welle 62 zumindest im gehäusenahen Bereich 4 die translatorische Schwingungsbewegung L jedoch nicht mit. Zumindest diejenige Motorkomponente, die für die Erzeugung der rotatorischen Schwingungsbewegung R verantwortlich ist, kann dementsprechend gehäusefest montiert sein und muss die translatorische Schwingung L nicht mitmachen. Dadurch ist eine sehr viel kompaktere Bauform und ein ruhigerer Betrieb möglich.

Der Bürstenkopf der Zahnbürste wird auf die Schwinge 46 aufgesteckt, so dass er deren translatorische Schwingungsbewegung L mitmacht. Dies kann z.B. zur Erzeugung einer Stocherbewegung ausgenutzt werden, um Plaque von den Zähnen zu entfernen. Gleichzeitig greift die Welle 62 in ein in an sich bekannter Weise innerhalb des Zahnbürstenkopfes vorgesehene Aufnahme ein und überträgt die Rotationsbewegung z.B. zur Erzeugung einer rotatorischen Schwingungsbewegung des Bürstenkopfes. In noch zu beschreibender Weise ist dazu die Welle entweder mit einem ausreichenden Spiel versehen oder ausreichend flexibel um die Schwingungsbewegung L auszugleichen.

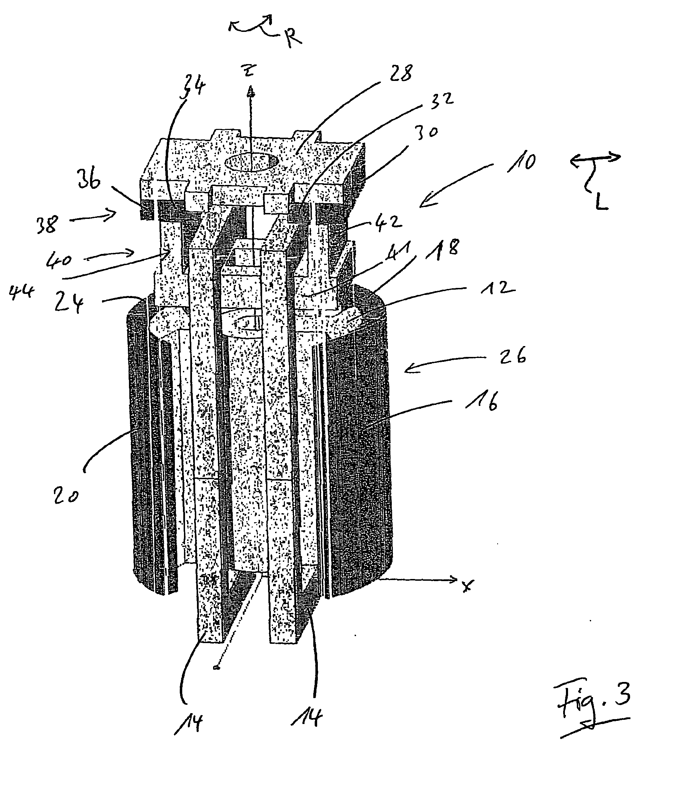

Mit Bezug zu den Fig. 3 bis 6 wird eine elektromotorische Antriebseinheit 10 beschrieben, die geeignet ist, um die rotatorische Schwingungsbewegung R und die translatorische Schwingungsbewegung L in einer Ausführungsform einer erfindungsgemäßen elektrischen Zahnbürste 2 bereitzustellen, wie sie in Fig. 1 gezeigt ist. Das Konzept des erfindungsgemäßen elektrischen Kleingerätes, bei dem die zwei Komponenten der elektromotorischen Antriebseinheit derart ausgestaltet sind, dass die Komponente zur Erzeugung der rotatorischen Schwingungsbewegung die translatorische Schwingungsbewegung nicht mitmacht, ist jedoch nicht auf die Verwendung der im folgenden beschriebenen besonderen Ausführungsform einer möglichen elektromotorischen Antriebseinheit beschränkt.

Fig. 3 zeigt die Motoreinheit einer erfindungsgemäßen elektromotorischen Antriebseinheit 10. Sie umfasst einen Rotor 12 als erste schwingungsfähige Komponente aus geeignetem metallischem magnetisierbarem Material, zum Beispiel Eisen. Der Rotor 12 ist innerhalb der Spule 14 angeordnet, die hier aus zwei Elementen besteht und in der gezeigten Anordnung ein Magnetfeld in X-Richtung erzeugt, wenn Strom durch sie fließt. Der Rotor 12 ist um die z-Achse drehbar gelagert, so dass er bei eingeschalteter Spule durch das dadurch erzeugte Magnetfeld magnetisiert wird. Die Permanentmagnete 16, 18, 20, 24 bilden eine erste Magnetanordnung 26, in deren Feld sich der Rotor 12 Energie-minimierend ausrichtet.

Die Permanentmagneten 16 und 18 sind dabei in radialer Richtung gegenpolig angeordnet. So ist zum Beispiel bei dem Permanentmagneten 16 der Südpol radial innen und der Nordpol radial außen angeordnet. Beim Permanentmagneten 18 ist der Nordpol radial innen und der Südpol radial außen angeordnet. Bei der gezeigten Anordnung der Fig. 3 ist beim Permanentmagneten 20 die Anordnung von Nordpol und Südpol entsprechend der Polanordnung des Permanentmagneten 16 und die Anordnung der Pole des Permanentmagneten 24 entsprechend der Polanordnung des Permanentmagneten 18.

Innerhalb der Spulenwicklung der Spule 14 befindet sich außerdem ein U-förmiges, metallisches, zum Beispiel aus Eisen bestehendes, Flussleitelement 40 mit einer Basis 41 und zwei Flussleitschenkeln 42, 44. Bei eingeschaltetem Spulenstrom wird darin ein magnetischer Fluss induziert, der von einer zweiten Magnetanordnung 38 aufgenommen wird, die zwei Permanentmagneten umfasst, wobei zum Beispiel die Segmente 30 und 36 Südpole sind und die Elemente 32 und 34 Nordpole. Die Magnetanordnung 38 ist fest mit der als Läufer 28 ausgestalteten zweiten schwingungsfähigen Motorkomponente verbunden.

Induktion eines magnetischen Flusses in dem Flussleitelement 40 bewirkt eine Energieminimierende Auslenkung der Magneten der zweiten Magnetanordnung 38, wodurch der Läufer 28 in X-Richtung, also bezüglich der Drehachse des Rotors 12 in radialer Richtung, ausgelenkt wird.

Der Rotor 12, das Flussleitelement 40 und der Läufer 28 haben jeweils eine zentrale Bohrung, durch die in noch zu beschreibender Weise eine Welle geführt ist, die von dem Rotor 12 zur Rotationsbewegung mit bewegt wird. Zumindest die zentrale Bohrung des Läufers 28 ist dabei derart ausreichend groß dimensioniert, dass eine mit dem Rotor 12 verbundene Welle die lineare Schwingungsbewegung L des Läufers 28 nicht mitmacht.

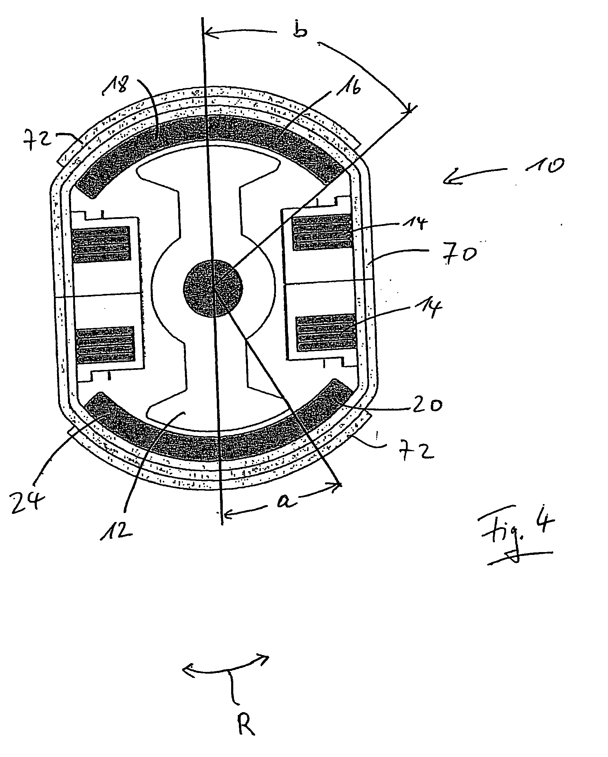

Fig. 4 zeigt einen Schnitt durch den Elektromotor der Fig. 3 in einer in Fig. 3 horizontalen Ebene.

Der angegebene Rotoröffnungswinkel a ist ein Maß für die umfangsmäßige Ausdehnung des Rotors 12. Der Winkel, der durch ein Magnetsegment 16, 18, 20 bzw. 24 gebildet wird, ist mit b bezeichnet.

In Fig. 4 erkennt man im Querschnitt auch das hier zweischichtig ausgestaltete Gehäuse 70 zusammen mit einer Gehäuseverstärkung 72, die im Bereich der Permanentmagneten 16, 18, 20, 24 vorgesehen ist. Das Gehäuse 70 und die Gehäuseverstärkung 72 bestehen aus Elektroblech, zum Beispiel mit einer magnetischen Flussdichte von 1,7 Tesla. Das Gehäuse 70 mit der Gehäuseverstärkung 72 ermöglicht insbesondere im Bereich der Permanentmagneten 16, 18, 20, 24 den magnetischen Rückschluss für den magnetischen Fluss.

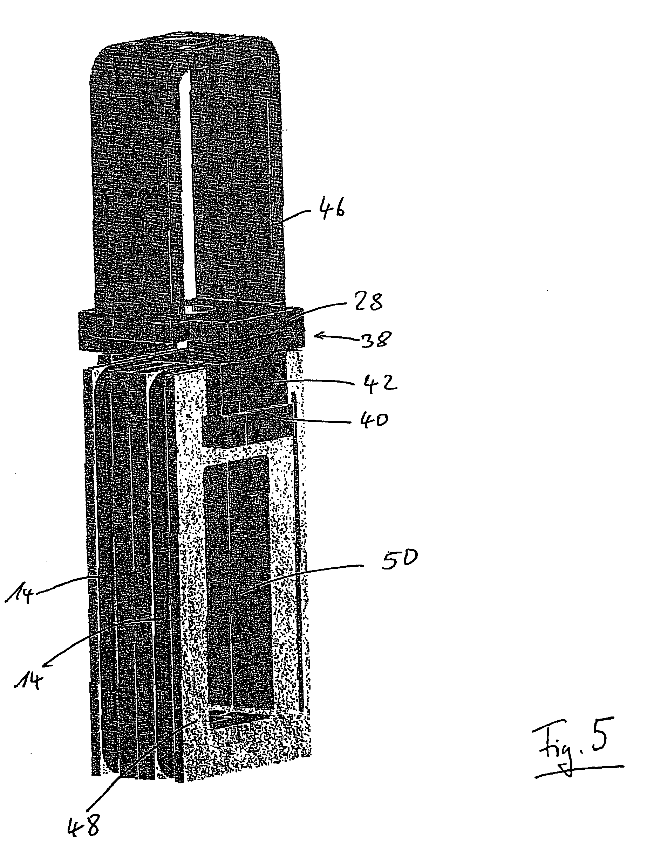

Fig. 5 zeigt eine Perspektivansicht des in Fig. 3 sichtbaren Systems ohne den Rotor 12 und den Läufer 28. Die Spulenwicklungen 40 werden von einem Spulenträger 48 getragen. Eine Schwinge 46 ist fest mit dem Läufer 28 verbunden. Durch die Spulenöffnung 50 erstreckt sich der in Fig. 5 nicht gezeigte Rotor 12.

Die Geometrien der Magnetanordnung 26 und des Rotors 12 sind so gewählt, dass ein Reluktanzmoment entsteht, das als Rückstellmoment für die Rotationsbewegung des Rotors 12 wirken kann. Bei eingeschaltetem Spulenstrom wird in dem Rotor 12 ein Magnetfeld induziert, das sich im Magnetfeld der ersten Magnetanordnung 26 ausrichtet und so zu einer Rotationsbewegung des Rotors 12 führt. Wird der Spulenstrom ausgeschaltet, können sich die Magnetfeldlinien der Permanentmagneten 16, 18, 20 und 24 über den metallischen Rotor 12 kurzschließen und so in an sich bekannter Weise ein Reluktanzmoment erzeugen. Bei geeigneter Wahl insbesondere des Rotoröffnungswinkels a und des Magnetsegmentwinkels b lässt sich ein resultierendes Reluktanzmoment einstellen, das im Wesentlichen linear vom Auslenkungswinkel des Rotors 12 um die Drehachse z abhängt.

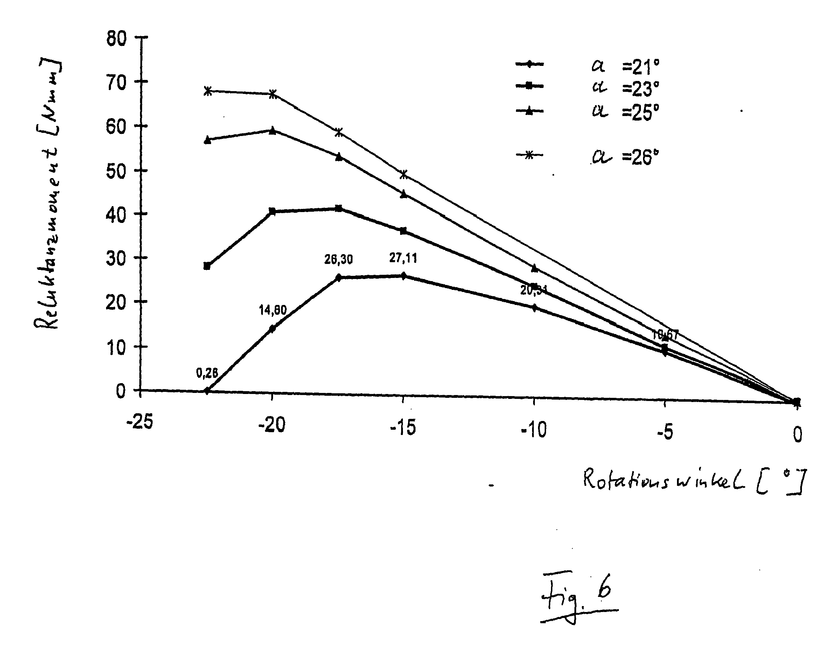

Fig. 6 zeigt entsprechende Simulationsergebnisse für unterschiedliche Rotoröffnungswinkel a bei einem festen Magnetsegmentwinkel b. Bei der gezeigten Simulation erweist sich das Reluktanzmoment im gezeigten Beispiel bei einem Rotoröffnungswinkel a = 26° vom Auslenkungswinkel des Rotors 12 bis zu einer Auslenkung von 20° in vorteilhafter Weise als linear abhängig.

Mit geeigneter Auslegung erübrigen sich damit mechanische Rückstellfedern, um den Rotor in seine Ausgangslage zurück zu bringen. In diesem Fall hat die schwingungsfähige Komponente des Rotors 12 eine spezifische Resonanzfrequenz f_{R}. Werden zusätzlich weitere mechanische Federeinheiten vorgesehen, ändert sich die Resonanzfrequenz entsprechend.

In ähnlicher Weise kann das Reluktanzmoment des zweiten schwingungsfähigen Systems, das zumindest den Läufer 28 zusammen mit der zweiten Magnetanordnung 38 umfasst, ausgenutzt werden, um zumindest einen Teil der notwendigen Rückstellkraft des linear ausgelenkten Läufers 28 bereitzustellen.

Insbesondere wird bei eingeschaltetem Spulenstrom in dem Flussleitelement 40 ein Magnetfeld induziert, das über die Flussleitschenkel 42, 44 zu der zweiten Magnetanordnung 38 geführt wird. Der Läufer 28 wird in X-Richtung ausgelenkt, um die Energie des Systems zu minimieren. Wird der Spulenstrom jetzt abgeschaltet, können sich die Magnetfeldlinien der Pole der Magnete der Magnetanordnung 38 über die Enden der Flussleitschenkel 42, 44 kurzschließen und führen so zu einem Reluktanzmoment, das den Läufer 28 in X-Richtung zurück bewegt. Der Läufer 28 hat zusammen mit der zweiten Magnetanordnung 38 eine spezifische Resonanzfrequenz f_{L}. Werden alternativ oder zusätzlich mechanische Federelemente eingesetzt, um den Läufer 28 nach der Auslenkung wieder in seine Ursprungslage zurück zu bringen, ändert sich die Resonanzfrequenz dementsprechend.

Die beschriebenen Ausführungsformen der erfindungsgemäßen elektromotorischen Antriebseinheit werden bei der Verwendung in einer elektrischen Zahnbürste wie folgt eingesetzt.

An die Spule 14 wird ein Wechselstrom angelegt. Seine Frequenz ist an den gewünschten Effekt angepasst. Entspricht die Frequenz zum Beispiel der Resonanzfrequenz f_{R} der rotatorischen Oszillationsbewegung des Rotors 12, wird hauptsächlich diese Bewegung angeregt. Entspricht die an die Spule angelegte Frequenz andererseits eher der Resonanzfrequenz f_{L} des linear oszillierenden Läufers 28, wird hauptsächlich dessen lineare Schwingungsbewegung angeregt. Überlagerte Bewegungen lassen sich zum Beispiel durch Überlagerung verschiedener Frequenzanteile erreichen. Mit dem System lassen sich also die einzelnen Bewegungsmodi im Wesentlichen unabhängig voneinander anregen. Je nach Stärke des eingespeisten Stromes bei der jeweiligen Frequenz lässt sich auch die Bewegungsamplitude der jeweiligen Schwingungsbewegung einstellen.

Die Schwingungsbewegungen des Läufers 28 und der Welle 62 werden in beschriebener Weise auf den Bürstenkopf der elektrischen Zahnbürste übertragen.

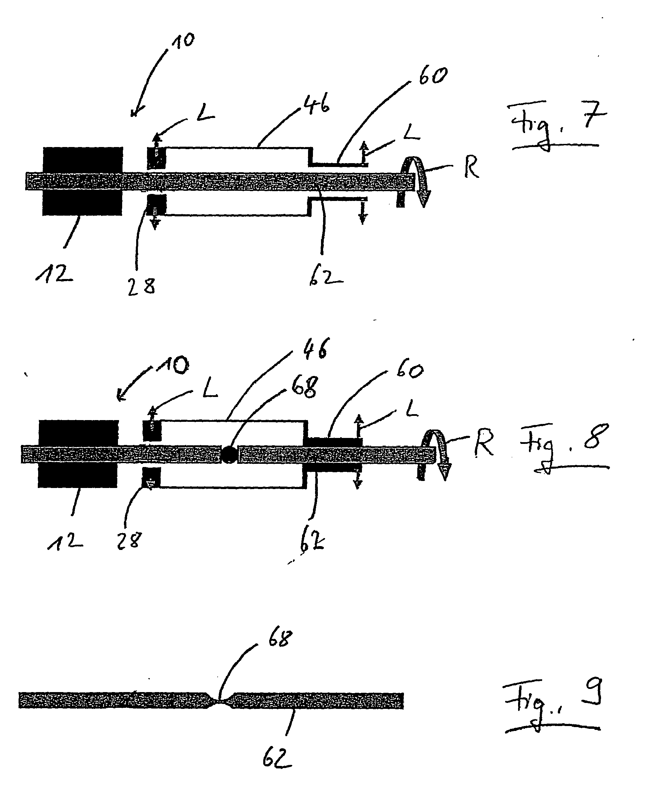

Fig. 7 zeigt im Querschnitt eine schematische Anordnung für die Verwendung bei einer elektrischen Zahnbürste. In dem Rotor 12 ist eine Welle 62 befestigt, die die Rotationsbewegung des Rotors 12 mitmacht und sich insofern in Drehrichtung R rotatorisch bewegt. Der Läufer 28 bewegt sich relativ zu dieser Anordnung radial in Richtung der Pfeile L. Über die Schwinge 46 wird diese Bewegung in die Halterung 60 für den Bürstenkopf einer elektrischen Zahnbürste weitergeleitet. In nicht gezeigter Weise ist der Bürstenkopf der elektrischen Zahnbürste mit der Halterung 60 und der Welle 62 verbunden, um die rotatorische Bewegung R bzw. die radiale Linearbewegung L mitzumachen. Dabei muss die Welle 62 ausreichend flexibel ausgestaltet sein oder im Bürstenkopf mit einem ausreichenden Spiel gelagert sein, um die translatorische Schwingungsbewegung L ausgleichen zu können, die von der Halterung 60 auf den Bürstenkopf übertragen wird.

Fig. 8 zeigt eine abgewandelte Ausführungsform, bei der die Halterung 60 mit der Welle 62 verbunden ist, die bei dieser Ausführungsform ein Gelenk 68 umfasst, so dass die Linearbewegung L auf den in Fig. 8 rechten Teil der Welle 62 übertragen wird. Der nicht gezeigte Bürstenkopf einer elektrischen Zahnbürste ist mit dem rechten Teil der Welle 62 verbunden, der dann die die lineare Schwingungsbewegung L und die rotatorische Schwingungsbewegung R durchführt und auf den Bürstenkopf überträgt. Auch bei dieser Ausführungsform wird das erfindungsgemäße Konzept verwirklicht, dass diejenige Motorkomponente, die für die Bereitstellung der rotatorischen Bewegung verantwortlich ist, (hier der Rotor 12) die Schwingungsbewegung der Motorkomponente, die für die Bereitstellung der translatorischen Schwingungsbewegung L zuständig ist, (hier des Läufers 28) nicht mitmacht. Insbesondere auch dort, wo die Welle 62 mit dem Rotor 12 in Verbindung steht, wird die translatorische Schwingungsbewegung L nicht auf die Welle 62 übertragen.

Fig. 9 zeigt eine mögliche Ausgestaltung einer zum Beispiel aus Kunststoff gefertigten Welle mit einem Gelenk, das hier einfach durch einen verjüngten Bereich 68 gebildet wird, der insofern flexibler als der umgebende Bereich der Welle 62 ist.

### Bezugszeichenliste

- 2: elektrische Zahnbürste
- 4: Gehäuse
- 6: Puffer
- 10: elektromotorische Antriebseinheit
- 12: Rotor
- 14: Spule
- 16, 18, 20, 24: Permanentmagnet
- 26: erste Magnetanordnung
- 28: Läufer
- 30, 32, 34, 36: Magnetsegmente
- 38: zweite Magnetanordnung
- 40: Flussleitelement
- 41: Basis des Flussleitelementes
- 42, 44: Flussleitschenkel
- 46: Schwinge
- 48: Spulenträger
- 50: Spulenöffnung
- 60: Bürstenhalterung
- 62: Welle
- 68: Gelenk
- 70: Gehäuse
- 72: Gehäuseverstärkung
- 102: elektrische Zahnbürste
- 104: Gehäuse
- 106: Dichtung
- 146: Schwinge
- 162: Welle

- R: rotatorische Schwingungsbewegung
- L: lineare Schwingungsbewegung
- S: Schwenkbewegung
- a: Rotoröffnungswinkel
- b: Magnetsegmentwinkel

## Patentansprüche

1. Elektrisches Kleingerät mit
- einem Kopfelement, das eine rotatorische Bewegung (R) und eine translatorische Schwingungsbewegung (L) ausführt,
- einem Gehäuse (4),
- einer elektromotorischen Antriebseinheit (10) in dem Gehäuse (4) mit einem ersten Abtrieb zur Erzeugung einer rotatorischen Bewegung (R) bezüglich des Gehäuses (4), der wenigstens eine erste Komponente (12) der elektromotorischen Antriebseinheit (10) umfasst, und einem zweiten Abtrieb zur Erzeugung einer translatorischen Schwingungsbewegung (L) bezüglich des Gehäuses (4), der wenigstens eine zweite Komponente (28) der elektromotorischen Antriebseinheit (10) umfasst,
- einer Welle (62), die mit der ersten Komponente (12) der elektromotorischen Antriebseinheit (10) zur Übermittlung der rotatorischen Bewegung an das Kopfelement verbunden ist,
- eine Schwinge (46), die mit der zweiten Komponente (28) der elektromotorischen Antriebseinheit (10) zur Übermittlung der translatorischen Schwingungsbewegung (L) an das Kopfelement verbunden ist,
**dadurch gekennzeichnet, dass**
die erste Komponente (12) und die zweite Komponente (28) derart entkoppelt sind, dass die erste Komponente (12) der Schwingungsbewegung (L) der zweiten Komponente (28) nicht folgt.

2. Elektrisches Kleingerät nach Anspruch 1, **dadurch gekennzeichnet, dass** die erste Komponente (12) und die zweite Komponente (28) über keine starre mechanische Verbindung verfügen.

3. Elektrisches Kleingerät nach einem der Ansprüche 1 oder 2, **dadurch gekennzeichnet, dass** die erste Komponente (12) und die zweite Komponente (28) Permanentmagnete umfassen, die sich unabhängig voneinander im Feld einer elektromagnetischen Spule (14) bewegen können.

4. Elektrisches Kleingerät nach einem der Ansprüche 1 bis 3, **gekennzeichnet durch** einen Puffer (6) zwischen dem Gehäuse (4) und der Schwinge (46).

5. Elektrisches Kleingerät nach einem der Ansprüche 1 bis 4, **dadurch gekennzeichnet, dass** die rotatorische Bewegung (R) eine rotatorische Schwingungsbewegung ist.

6. Elektrisches Kleingerät nach einem der Ansprüche 1 bis 5, **dadurch gekennzeichnet, dass** es als elektrische Zahnbürste (2) ausgebildet ist und das wenigstens ein Kopfelement einen Bürstenkopf umfasst.

7. Elektromotorische Antriebseinheit (10) für ein elektrisches Kleingerät, insbesondere für ein elektrisches Kleingerät nach einem der Ansprüche 1 bis 6, mit
- wenigstens einer ersten und wenigstens einer zweiten schwingungsfähigen Komponente (12, 28),
- einer Spule (14) zur Erzeugung eines Magnetfeldes,
- einer ersten Magnetanordnung (26), die wenigstens einen ersten Permanentmagneten (16, 18, 20, 24) aufweist, der in Wechselwirkung mit einem mit der Spule (14) erzeugten Magnetfeld eine Kraft zur Anregung einer rotatorischen Schwingung (R) der wenigstens einen ersten schwingungsfähigen Komponente (12) erzeugt, und
- einer zweiten Magnetanordnung (38), die wenigstens einen zweiten Permanentmagneten (30, 32, 34, 36) aufweist, der in Wechselwirkung mit einem mit der Spule (14) erzeugten Magnetfeld eine Kraft zur Anregung einer linearen Schwingungsbewegung (L) der wenigstens einen zweiten schwingungsfähigen Komponente (28) erzeugt,
**gekennzeichnet durch**
wenigstens ein Flussleitelement (40), das derart angeordnet ist, dass es mit der Spule (14) erzeugten magnetischen Fluss zur Wechselwirkung mit dem wenigstens einen zweiten Permanentmagneten (30, 32, 34, 36) leitet.

8. Elektromotorische Antriebseinheit nach Anspruch 7, **dadurch gekennzeichnet, dass** das wenigstens eine Flussleitelement (40) ein die Spulenwindungen durchgreifendes metallisches Joch (41, 42, 44) umfasst.

9. Elektromotorische Antriebseinheit nach einem der Ansprüche 7 oder 8, **dadurch gekennzeichnet, dass** das wenigstens eine Flussleitelement (40) die Bewegung der wenigstens einen ersten schwingungsfähigen Komponente (12) mitmacht.

10. Elektromotorische Antriebseinheit nach einem der Ansprüche 7 bis 9, **dadurch gekennzeichnet, dass** die lineare Schwingungsbewegung (L) senkrecht zur Drehachse der rotatorischen Schwingungsbewegung (R) ist.

11. Elektromotorische Antriebseinheit nach einem der Ansprüche 7 bis 10, **dadurch gekennzeichnet, dass** die wenigstens eine erste (12) und die wenigstens eine zweite (28) schwingungsfähige Komponente unterschiedliche Resonanzfrequenzen (f_{R}, f_{L}) aufweisen.

12. Elektromotorische Antriebseinheit nach einem der Ansprüche 7 bis 11, **dadurch gekennzeichnet, dass** die wenigstens eine erste schwingungsfähige Komponente (12), die erste Magnetanordnung (26) und die Spule (14) derart ausgestaltet sind, dass ein nach dem Ausschalten des Spulenstroms wirkende Reluktanzmoment unter Winkelauslenkung der ersten schwingungsfähigen Komponente (12) als rücktreibendes Moment wirkt.

13. Elektromotorische Antriebseinheit nach einem der Ansprüche 7 bis 12, **dadurch gekennzeichnet, dass** das wenigstens eine Flussleitelement (40), die zweite Magnetanordnung (38) und die Spule (14) derart ausgestaltet sind, dass ein nach dem Ausschalten des Spulenstroms wirkendes Reluktanzmoment unter Linearauslenkung der zweiten schwingungsfähigen Komponente (28) als rücktreibendes Moment wirkt.

14. Verfahren zum Betreiben einer elektromotorischen Antriebseinheit (10) mit wenigstens einer ersten und wenigstens einer zweiten schwingungsfähigen Komponente (12, 28), einer Spule (14) zur Erzeugung eines Magnetfeldes, einer ersten Magnetanordnung (26), die wenigstens einen ersten Permanentmagneten (16, 18, 20, 24) aufweist, der in Wechselwirkung mit einem mit der Spule (14) erzeugten Magnetfeld eine Kraft zur Anregung einer rotatorischen Schwingungsbewegung (R) der wenigstens einen ersten schwingungsfähigen Komponente (12) erzeugt, und einer zweiten Magnetanordnung (38), die wenigstens einen zweiten Permanentmagneten (30, 32, 34, 36) aufweist, der in Wechselwirkung mit einem mit der Spule (14) erzeugten Magnetfeld eine Kraft zur Anregung einer linearen Schwingungsbewegung (L) der wenigstens einen zweiten schwingungsfähigen Komponente (28) erzeugt,
**dadurch gekennzeichnet, dass**
mit der Spule (14) erzeugter magnetischer Fluss mit Hilfe eines Flussleitelementes (40) zur Wechselwirkung mit dem wenigstens einen zweiten Permanentmagneten (30, 32, 34, 36) geleitet wird.

15. Verfahren nach Anspruch 14, **dadurch gekennzeichnet, dass** die wenigstens eine erste (12) und die wenigstens eine zweite (28) schwingungsfähige Komponente zu Schwingungen unterschiedlicher Frequenz angeregt werden.
